# EUROPÄISCHE PATENTANMELDUNG

(11) **EP 3 183 972 A1**
(43) Veröffentlichungstag der Anmeldung: **28.06.2017**
(21) Anmeldenummer: 16200680.3
(22) Anmeldetag: 25.11.2016
(51) Int. Cl.: A22C 17/00, B65G 47/68, B65G 54/02

(54) **VORRICHTUNG ZUM BEWEGEN VON PORTIONEN**

(30) Priorität: 22.12.2015 DE 102015122634
(71) Anmelder: Weber Maschinenbau GmbH Breidenbach, 35236 Breidenbach (DE)
(72) Erfinder: Nichau, Marco, 57334 Bad Laasphe (DE); Eckhardt, Christoph, 35236 Breidenbach (DE)
(74) Vertreter: Manitz Finsterwald Patentanwälte PartmbB

(57) **Zusammenfassung**

Die Erfindung betrifft eine Vorrichtung zum Bewegen von Portionen, die jeweils wenigstens eine von einem Lebensmittelprodukt, insbesondere mittels einer Aufschneidevorrichtung (40), insbesondere eines Hochgeschwindigkeits-Slicers, abgetrennte Scheibe umfassen, mit einer Mehrzahl individuell bewegbarer oder jeweils als zusammengeschlossene Einheit bewegbarer Transportmover zum Transport der Portionen, mit einem Bahnsystem (10) für die Transportmover, in welchem die Transportmover entlang wenigstens einer vorgegebenen Bahn in einer Transportrichtung bewegbar sind, und mit einer Steuereinrichtung zum Steuern der Bewegungen der Transportmover in dem Bahnsystem (10), wobei die Transportmover jeweils zumindest einen mit dem Bahnsystem (10) zusammenwirkenden Läufer und wenigstens einen am Läufer angebrachten Träger für Portionen umfassen, und wobei das Bahnsystem (10) mehrere Aufnahmespuren (16, 18, 20, 22) zur mehrspurigen Aufnahme von Portionen in einem Portionierbereich (12) und zumindest eine Abgabespur (28), die mehreren Aufnahmespuren (16, 18, 20, 22) zugeordnet ist, zur Abgabe von Portionen in einem Abgabebereich (14) umfasst.

## Beschreibung

Die Erfindung betrifft eine Vorrichtung zum Bewegen von Portionen, die jeweils wenigstens eine von einem Lebensmittelprodukt, insbesondere mittels einer Aufschneidevorrichtung, insbesondere eines Hochgeschwindigkeits-Slicers, abgetrennte Scheibe umfassen.

Insbesondere bei der Produktion von Ein- oder Mehrsorten-Packungen, die eine oder mehrere Portionen aus beispielsweise Wurst- und/oder Käsescheiben enthalten, werden Fördersysteme benötigt, um die mittels einer oder mehrerer Aufschneidevorrichtungen, insbesondere so genannter Slicer, erzeugten und Portionen oder Teilportionen bildenden Lebensmittelscheiben einer Verpackungsvorrichtung zuzuführen.

Das Fördersystem dient in der Praxis nicht lediglich dem Transport der Portionen vom Slicer zur Verpackungsvorrichtung, sondern hat zusätzliche, von der jeweiligen Anwendung abhängige Funktionen zu erfüllen, die dem Fachmann grundsätzlich bekannt sind und von denen an dieser Stelle lediglich beispielhaft die Pufferung und die Formatbildung entsprechend den Anforderungen einer Verpackungsvorrichtung genannt werden sollen. Unmittelbar im Anschluss an den Slicer können außerdem Portionierungs- sowie Komplettierungsaufgaben zu erfüllen sein. Ferner werden die Portionen in der Praxis meist im Bereich der Bahn, d.h. im Bereich der Förderstrecke, gewogen.

Eine immer größer werdende Bedeutung kommt zudem einem so genannten Mehrspurbetrieb zu, bei dem mehrere Lebensmittelprodukte gleichzeitig mittels eines Slicers aufgeschnitten werden. Ein gleichzeitiges Aufschneiden kann auch durch eine Mehrzahl von parallel arbeitenden, jeweils einspurig ausgebildeten Slicern erfolgen. Das nachgeordnete Fördersystem muss zu einem derartigen Mehrspurbetrieb und vor allem dazu in der Lage sein, aus den in der jeweiligen Anzahl von Spuren erzeugten Portionen diejenigen auch als Formatsätze bezeichneten Formate zu bilden, die von der nachgeordneten Verpackungsvorrichtung angefordert werden bzw. verarbeitet werden können.

Diese und weitere Aufgaben eines Fördersystems auf dem Gebiet der Handhabung von Portionen aus mittels Slicern von insbesondere laib- oder stangenförmigen Lebensmittelprodukten abgetrennten Scheiben werden derzeit mit Förderbandsystemen zufriedenstellend gelöst. Allerdings sind Förderbandsysteme mit einem hohen mechanischen Aufwand verbunden und grundsätzlich auf die Handhabung eines Stromes von Portionen ausgelegt. Es ist nicht oder allenfalls bedingt möglich, mit einem Förderbandsystem Einfluss auf eine einzelne Portion zu nehmen. Problematisch insbesondere im Hinblick auf den geforderten schonenden Transport der Portionen sind außerdem z.B. die Übergänge zwischen aufeinanderfolgenden Förderbandabschnitten. Des Weiteren lassen sich mit Förderbändern naturgemäß nur gerade Förderstrecken oder aus geradlinigen Abschnitten bestehende Förderstrecken realisieren, d.h. die Flexibilität bei der Auslegung einer Förderstrecke ist bei Förderbandsystemen begrenzt. Genauso sind die Möglichkeiten der gesamten Anlage begrenzt, z.B. bezüglich der zu verarbeitenden Produkte und der Portions- und Formatsatzbildungsmöglichkeiten. Außerdem ist in Verbindung mit im Lebensmittelbereich eingesetzten Förderbandsystemen ein vergleichsweise hoher Aufwand bei der Reinigung erforderlich, um die hohen Hygienestandards einhalten zu können.

Bekannt, z.B. aus DE 10 2014 106 400 A1, ist auch eine Transportvorrichtung mit einer Mehrzahl individuell bewegbarer oder jeweils als zusammengeschlossene Einheit bewegbarer Transportmover zum Transport der Portionen, und einem Bahnsystem für die Transportmover, in welchem die Transportmover entlang wenigstens einer vorgegebenen Bahn in einer Transportrichtung bewegbar sind. Eine Steuereinrichtung steuert hierbei die Bewegungen der Transportmover in dem Bahnsystem. Im Bereich von Förderstrecken und anderen Strecken, z.B. Sortierstrecken, können mit einer solchen Vorrichtung einzelne Portionen gehandhabt und kann auf einzelne Portionen Einfluss genommen werden.

Eine derartige Bewegungsvorrichtung hat gegenüber herkömmlichen Förderbandsystemen viele Vorteile. So können die Portionen beispielsweise von der Aufnahme bis zur Abgabe ohne eine weitere Portionsübergabe transportiert werden. Im Vergleich dazu weisen Förderbandsysteme viele Übergänge zwischen einzelnen Bändern auf. Diese Übergänge können die Portionen, z.B. deren Aufbau oder Struktur, eventuell negativ beeinflussen. Durch das Bahnsystem werden Portionsübergaben vermieden oder wenigstens minimiert. Ferner können Sensoren eingespart werden, welche z.B. als Lichtschranken zur Überprüfung der Lagen der Portionen bei Förderbandsystemen notwendig sind.

Die Transportmover umfassen jeweils zumindest einen mit dem Bahnsystem zusammenwirkenden Läufer und wenigstens einen am Läufer angebrachten Träger für Portionen. Vorzugsweise transportiert jeder Transportmover bzw. jede Transportmover-Einheit direkt oder indirekt auf dem Träger eine Portion. Alternativ können auch mehrere Portionen auf einem Träger aufgenommen werden. Auch können mehrere, z.B. zwei unmittelbar aufeinander folgende, Transportmover gemeinsam eine oder mehrere Portionen transportieren.

Ein für diesen Zweck grundsätzlich verwendbares Transportsystem, auf das hiermit im Hinblick auf das Erfordernis der Ausführbarkeit ausdrücklich Bezug genommen wird, wird von der Firma MagneMotion Inc. mit Sitz in Devens, Massachusetts, USA, angeboten. Dieses System basiert auf einem sogenannten LSM-Antrieb, also auf einem Antrieb durch lineare Synchronmotoren, der von einem sogenannten linearen Induktionsmotor (LIM-Antrieb) zu unterscheiden ist. Im Unterschied zu einem LIM-Antrieb wird bei einem LSM-Antrieb ein Magnetfeld nicht mittels des sogenannten elektromagnetischen Wanderfeldes induziert, sondern das Magnetfeld wird durch Permanentmagnete bereitgestellt. Wenn der Läufer des Linearmotors die Permanentmagnete trägt und der Stator des Linearmotors das elektromagnetische Wanderfeld erzeugt, dann kann man sich das Antriebsprinzip eines LSM-Antriebs bildlich so vorstellen, dass der mit dem Permanentmagneten versehene Transporter von dem sich längs des Stators bewegenden Magnetfeld über die Transportstrecke gezogen wird. Ein solches Transportsystem bzw. Antriebsprinzip ist beispielsweise in WO 2003/029651 A2 und WO 2010/085670 A1 beschrieben. Auf diese Dokumente wird hiermit bezüglich der Offenbarung eines möglichen Antriebs- bzw. Funktionsprinzips für die Erfindung ausdrücklich Bezug genommen.

Nachteilig an derartigen Bewegungsvorrichtungen ist jedoch, dass es aufgrund der Bahnführung häufig zu Stillständen der Transportmover und damit einhergehend zu Brems- und Beschleunigungsvorgängen kommt. Diese Vorgänge kosten zum einen unnötig Energie. Zum anderen besteht die Gefahr, dass die Portionen auf den Trägern verrutschen.

Es ist daher eine Aufgabe der Erfindung, eine Vorrichtung zum Bewegen von Portionen dahingehend zu verbessern, dass ein möglichst kontinuierlicher Portionsstrom zum Abgabebereich erzielt und Stillstände der Transportmover vermieden werden.

Die Lösung dieser Aufgabe erfolgt durch eine Vorrichtung mit den Merkmalen des Anspruchs 1, ein Verfahren mit den Merkmalen des Anspruchs 8 sowie durch eine Vorrichtung mit den Merkmalen des Anspruchs 12.

Erfindungsgemäß umfasst das Bahnsystem mehrere Aufnahmespuren zur mehrspurigen Aufnahme von Portionen in einem Portionierbereich und zumindest eine Abgabespur, die mehreren Aufnahmespuren zugeordnet ist, zur Abgabe von Portionen in einem Abgabebereich.

Im Rahmen der Erfindung ist der Begriff "Portion" breit zu verstehen. Eine Portion kann dementsprechend aus nur einer einzigen Scheibe bestehen. Alternativ kann eine Portion mehrere Scheiben umfassen, die in einer grundsätzlich beliebigen Relativanordnung vorliegen können, beispielsweise in einer sogenannten Stapel-oder Schindelanordnung, wie sie auf dem hier in Rede stehenden technischen Gebiet dem Fachmann bekannt sind. Bei der Portion kann es sich um eine Gesamtportion handeln, wie sie abschließend verpackt und im Handel angeboten wird. Alternativ kann die Portion eine Teilportion sein, die erst zusammen mit einer oder mehreren weiteren Teilportionen, die wiederum jeweils eine oder mehrere Scheiben umfassen können, eine Gesamtportion bildet. Die Teilportionen einer Gesamtportion können aus unterschiedlichen Produktsorten gebildet sein, so dass durch Zusammenstellen mehrerer Teilportionen eine Mehrsorten-Portion erzeugt werden kann und nach deren Verpackung somit eine Mehrsorten-Packung vorliegt. Bei den Scheiben kann es sich beispielsweise um vergleichsweise dünne Scheiben handeln, wie sie in Form von Wurst- oder Käseaufschnitt allgemein bekannt sind. Alternativ kann es sich bei den Scheiben jeweils um im Vergleich zu Aufschnitt relativ dicke Stücke wie beispielsweise Frischfleischstücke handeln. Eine Mehrsorten-Portion kann aus Scheiben unterschiedlicher Sorte, Form und/oder Ablageform bestehen. Erfindungsgemäß können ferner auch mehrere jeweils sortenreine Verpackungen gemischt und in einem vorgebbaren Verhältnis einer gemeinsamen Umverpackung zugeführt werden.

Mit anderen Worten handelt es sich im Rahmen der Erfindung bei einer Portion um die im Hinblick auf die Transportaufgabe kleinste Einheit, die einerseits über eine bestimmte Strecke transportiert werden muss und die gegebenenfalls -je nach Anwendung - andererseits zusätzlich zu weiteren Portionen in Beziehung gesetzt werden muss, um die jeweiligen Anforderungen der Gesamtanlage, die eine oder mehrere Aufschneidevorrichtungen, insbesondere Slicer, das Bahnsystem sowie eine oder mehrere Verpackungsvorrichtungen umfasst, zu erfüllen. Beispielsweise hinsichtlich der Bildung von Formaten, wie sie für die jeweils vorgesehene Verpackungsvorrichtung bereitgestellt werden müssen.

Ein Transportmover kann eine oder mehrere Portionen transportieren. Alternativ ist es auch möglich, dass mehrere, insbesondere zwei, Transportmover gemeinsam zumindest eine Portion transportieren und eine zusammengeschlossene Einheit bilden. Die Transportmover können dabei gewissermaßen gemeinsam auf dem Bahnsystem als eine Einheit bewegt werden, welche auch als "Tandem-Mover" bezeichnet wird. Die Transportmover können einen gemeinsamen Träger oder mehrere Träger aufweisen. Dadurch können auch größere Lasten, insbesondere schwerere und/oder flächenmäßig größere Portionen, auf dem Bahnsystem bewegt werden als mit nur einem Transportmover.

Insbesondere können die Abgabespuren allen oder einem Teil der mehreren Aufnahmespuren zugeordnet sein. Vorzugsweise ist somit die Anzahl der Abgabespuren kleiner als die Anzahl der Aufnahmespuren. Besonders bevorzugt ist lediglich eine einzige Abgabespur für sämtliche Aufnahmespuren vorgesehen, d.h. die Abgabe erfolgt stets einspurig ausgehend von einer einzigen Spur. Insbesondere können zwei, drei, vier, fünf oder mehr Aufnahmespuren vorgesehen sein.

Die Aufnahme einer Portion kann im Portionierbereich erfolgen, indem die Portion unmittelbar von einer Aufschneidevorrichtung empfangen wird. In diesem Fall kann direkt auf den Träger des Transportmovers geschnitten werden. Anschließend kann die Portion auf dem Transportmover durch die gesamte Anlage bewegt werden, insbesondere einschließlich einer Abgabe der Portion an eine Verpackungsvorrichtung im Abgabebereich. Die gesamte Anlage kann hierbei als Bahnsystem ausgebildet sein.

Es ist alternativ auch möglich, dass die Transportmover erst im Portionierbereich die Träger, mit oder ohne Portion, erhalten.

Alternativ kann die Portion bzw. ein Träger von einer herkömmlichen Fördereinrichtung, z.B. einem Förderband, an die Transportmover übergeben werden. So kann beispielsweise zunächst auf ein Förderband geschnitten und die Portion abtransportiert werden. Anschließend kann eine Übergabe der Portion von dem Förderband an ein Bahnsystem erfolgen. Dieses Bahnsystem kann als multifunktionales Zwischenglied zwischen der Aufschneidevorrichtung und einer Verpackungsvorrichtung dienen. Die Portionen können entweder direkt an die Verpackungsvorrichtung oder z.B. zunächst an eine Einlegevorrichtung, z.B. ein Einlegeband, übergeben werden, über welches die Portion dann zu einer Verpackungsvorrichtung gelangt.

Der Einfachheit halber werden beide vorstehend erläuterten Varianten im Folgenden unter dem Begriff "Portioniervorrichtung" zusammengefasst. Die Portioniervorrichtung kann somit entweder eine ein- oder mehrspurige Aufschneidevorrichtung oder eine herkömmliche Fördereinrichtung sein, von welcher die Portionen bzw. die Träger jeweils auf die Transportmover gelangen.

Im Portionierbereich können mehrere Portioniervorrichtungen vorgesehen sein. Jeder Portioniervorrichtung kann eine separate Aufnahmespur zugeordnet sein. Vorzugsweise ist jeder Spur einer mehrspurigen Aufschneidevorrichtung eine eigene Aufnahmespur zugeordnet. Auf diese Weise können mehrere, auch unterschiedliche Produkte gleichzeitig geschnitten und abtransportiert werden.

Bei dem Abgabebereich kann es sich um einen Verpackungsbereich handeln, also um den Bereich, an dem die Portion verpackt oder an eine Verpackungsvorrichtung übergeben wird. Unter dem Begriff "Abgabebereich" sind jedoch auch solche Bereiche zu verstehen, in denen die Produkte beispielsweise an eine herkömmliche Fördereinrichtung oder eine Bearbeitungseinrichtung, z.B. eine Wiegeeinrichtung, übergeben werden. Vorzugsweise ist eine Abgabespur einem einspurigen Einleger zugeordnet. Bei einem mehrspurigen Einleger kann für jede Spur des Einlegers eine separate Abgabespur vorgesehen sein.

Da in der Praxis häufig eine Verpackungsvorrichtung pro Zeiteinheit mehr Portionen verpacken als eine einzige Aufschneidevorrichtung erzeugen kann, müssen bei herkömmlichen Bahnsystemen die Transportmover eventuell zeitweise gepuffert werden, was mit Stillständen verbunden ist. Dadurch, dass erfindungsgemäß eine Abgabespur mehreren Aufnahmespuren, welche beispielsweise Portionen mehrerer Aufschneidevorrichtungen aufnehmen können, zugeordnet ist, können die Transportmover kontinuierlich bewegt werden. Vorzugsweise gelangen nur solche Transportmover in den Abgabebereich, die mit einer oder mehreren Portionen beladen sind. Durch die getrennten Aufnahmespuren können insbesondere Pausen beim Aufschneiden kompensiert werden, welche beispielsweise durch Beladevorgänge sowie vorzeitig erreichte Schneidenden bei kurzen oder unterschiedlich langen Produktriegeln, insbesondere im Fall von Naturprodukten, auftreten können.

Stillstandzeiten und damit verbundene Brems- und Beschleunigungsvorgänge zumindest für beladene Transportmover können folglich durch die Erfindung minimiert werden. Dadurch sind die im Bahnsystem geführten Transportmover praktisch ausschließlich Gleitreibung ausgesetzt. Langsame Bewegungen und Stillstände, welche in die Haftreibung führen würden, werden zumindest für beladene Transportmover vermieden oder zumindest gering gehalten.

Weiterbildungen der Erfindung sind auch den abhängigen Ansprüchen, der Beschreibung sowie den beigefügten Zeichnungen zu entnehmen.

Gemäß einer Ausführungsform sind die Aufnahmespuren unterschiedlich lang. Die Transportmover auf den unterschiedlichen Aufnahmespuren können bei entsprechender Steuerung der Transportmover bzw. der Aufschneidevorrichtungen automatisch aufeinander abgestimmt werden. Die Aufnahmespuren bilden dadurch unterschiedlich lange Puffer. Die Transportmover sind somit automatisch derart aufeinander abgestimmt, dass sich ein Vereinen der Aufnahmespuren besonders einfach gestaltet, wobei die Geschwindigkeiten der Transportmover nicht oder nur geringfügig angepasst werden müssen.

Nach einer weiteren Ausführungsform werden die Aufnahmespuren nacheinander miteinander vereint. Dies kann beispielsweise besonders einfach durch unterschiedlich lange Aufnahmespuren erreicht werden. Durch unterschiedlich lange Aufnahmespuren werden diese automatisch nacheinander - und nicht an einer gemeinsamen Stelle - zusammengeführt. Vorzugsweise werden je zwei Aufnahmespuren nacheinander vereint. Die Aufnahmespuren werden insbesondere gestaffelt bzw. kaskadenartig zusammenführt, nach Art eines "ReißverschlussSystems" im Straßenverkehr. Anders als bei einem gleichzeitigen Zusammenführen mehrerer Aufnahmespuren kommt es somit nicht zu Staus an den Vereinigungspunkten.

Alternativ oder zusätzlich kann vorgesehen sein, dass zunächst die Aufnahmespuren gruppenweise jeweils auf zumindest eine Zwischenspur und anschließend die Zwischenspuren auf die Abgabespur vereint werden. Ein solcher Parallelprozess kann in Abhängigkeit von der jeweiligen Anwendung eine effizientere oder flexiblere Handhabung der Aufnahmespuren bzw. der jeweils von diesen stammenden Transportmover ermöglichen. Zum Beispiel ist es möglich, die einzelnen Gruppen von Aufnahmespuren bzw. die einzelnen Zwischenspuren unabhängig voneinander zu führen, so dass z.B. gegebenenfalls vorgesehene Funktionsbereiche nicht gleichzeitig allen Aufnahmespuren zugeordnet zu sein brauchen.

Gemäß einer weiteren Ausführungsform erfolgt das Vereinen der Aufnahmespuren stets von derselben Seite her. Die Transportmover werden somit einseitig eingefädelt. Dies ist insbesondere hilfreich, wenn einseitig gestaltete, z.B. auskragende und/oder asymmetrische, Transportmover bzw. entsprechend gestaltete Träger für die Transportmover eingesetzt werden. Alternativ kann die Vereinigung der Aufnahmespuren jedoch auch von verschiedenen Seiten her erfolgen. Ein beidseitiges Einfädeln ist insbesondere bei symmetrisch gestalteten Transportmovern bzw. Trägern vorteilhaft.

Nach einer weiteren Ausführungsform sind Weichen vorgesehen, welche die Aufnahmespuren vereinen. Durch Weichen lässt sich das Zusammenführen der Aufnahmespuren auf besonders einfache Weise realisieren. Zwischen zwei Weichen kann ein normales, insbesondere geradliniges, Bahnsegment vorgesehen sein. Die Weichen sind somit vorzugsweise nicht unmittelbar miteinander verkettet. Die, insbesondere im Verhältnis zu den jeweiligen Gesamtlängen der Aufnahmespuren kurzen, Bahnsegmente zwischen den Weichen können jeweils gleich oder unterschiedlich lang sein. Auf diese Weise können anwendungsabhängig bemessene, relativ kurze Pufferstrecken geschaffen werden.

Erfindungsgemäß legen die Transportmover in den einzelnen Aufnahmespuren somit unterschiedlich lange Wege zurück. Dadurch ergibt sich eine höhere Leistung bzw. ein höherer Durchsatz beim Zusammenführen der Transportmover im Vergleich zu einer direkten Abfolge von Weichen. Dies resultiert auch daraus, dass die Steuerung darauf ausgelegt sein kann, die Transportmover immer in Bewegung zu halten, wobei das Bahnsegment bis zur nächsten Weiche jeweils als kleine Pufferstrecke dienen kann.

Gemäß einer weiteren Ausführungsform teilt sich die Abgabespur im Anschluss an den Abgabebereich in mehrere Aufnahmespuren auf. Für diese Aufteilung können beispielsweise Weichen vorgesehen sein. Die Abgabespur kann somit wieder aufgefächert werden, um z.B. die Transportmover nach dem Abgeben der Portionen wieder in unterschiedlichen Spuren den Portioniervorrichtungen zuführen zu können.

Nach einer weiteren Ausführungsform sind die Aufnahmespuren und die Abgabespur Bestandteile einer geschlossenen Rundstrecke des Bahnsystems, die vom Portionierbereich in den Abgabebereich und zurück zum Portionierbereich führt. Die Rundstrecke umfasst somit insbesondere einen mehrspurigen Portionierbereich zur mehrspurigen Aufnahme von Portionen, einen Bereich, in dem die Aufnahmespuren zusammengeführt werden, einen Abgabebereich, in dem die Portionen - bevorzugt in einer einzigen Abgabespur - abgegeben werden, und einen Bereich, in dem die Abgabespur wieder in mehrere Spuren aufgefächert wird.

Gemäß einer weiteren Ausführungsform umfasst das Bahnsystem wenigstens einen Pufferbereich, bevorzugt in Transportrichtung vor dem Abgabebereich, der eine höhere Bahn- bzw. Streckendichte aufweist als dem Pufferbereich unmittelbar vorgelagerte und nachgelagerte Bereiche. Insbesondere ist der Pufferbereich durch eine ein- oder mehrspurige Pufferstrecke gebildet, deren Länge größer, insbesondere wesentlich größer, ist als die kürzeste Entfernung zwischen Beginn und Ende des Pufferbereiches. Bevorzugt beträgt die Länge der Pufferstrecke ein Mehrfaches der kürzesten Entfernung zwischen Beginn und Ende des Pufferbereiches.

Die Erfindung betrifft auch ein Verfahren zum kontinuierlichen Zuführen von Portionen zu einer Verpackungsvorrichtung mit einer erfindungsgemäßen Vorrichtung. Die Transportmover nehmen im Portionierbereich in mehreren Aufnahmespuren Portionen auf. Anschließend werden die Transportmover aus zumindest einigen der Aufnahmespuren nacheinander auf dieselbe Abgabespur zusammengeführt. Schließlich werden die Portionen im Abgabebereich von der Abgabespur abgegeben.

Nach einer weiteren Ausführungsform werden während und/oder nach dem Zusammenführen der Transportmover jeweils vorgegebene oder vorgebbare Abstände zwischen den Transportmovern eingestellt. So kann eine kontinuierliche Abgabe der Portionen erreicht werden. Diese Abstandsbildung bildet eine Grundlage für ein synchrones Übergeben der Portionen. Die Portionen können z.B. vom Bahnsystem an Verpackungen übergeben werden, denn es liegen dann bereits jeweils mehrere Portionen umfassende Reihen bzw. Zeilen auf dem Bahnsystem vor.

Der Bedarf an abzugebenden Portionen kann erfasst und von den Portioniervorrichtungen bzw. den Aufschneidevorrichtungen entsprechend berücksichtigt werden. So können beispielsweise Mischportionen mit einem gezielt vorgebbaren Verhältnis der unterschiedlichen Produktsorten erzeugt werden.

Gemäß einer weiteren Ausführungsform wird während und/oder nach dem Zusammenführen der Transportmover eine jeweils vorgegebene oder vorgebbare Reihenfolge der Transportmover eingestellt. So können beispielsweise Mischportionen auf einfache Weise erstellt werden. Auch kann z.B. eingestellt werden, dass zunächst eine bestimmte Anzahl von Portionen einer Sorte A verpackt und anschließend eine bestimmte Anzahl von Portionen einer Sorte B verpackt wird. Die Reihenfolge der Transportmover kann auch derart eingestellt werden, dass z.B. ein gewünschtes Zielgewicht einer Gesamtportion erreicht wird, wenn mehrere Portionen als Teilportionen in eine Verpackung gelangen. Hierbei werden Transportmover mit unter- oder übergewichtigen Portionen entsprechend aneinandergereiht. Die Gewichtsbestimmung kann beispielsweise im Portionierbereich erfolgen.

Nach einer weiteren Ausführungsform wird ein Transportmover nur dann vom Portionierbereich in Richtung Abgabebereich bewegt, wenn dieser beladen ist. Wenn beispielsweise eine Portion an der Aufschneidevorrichtung fehlt, fährt der Transportmover nicht los. Dadurch entstehen keine Lücken und leere Transportmover bewegen sich nicht unnötig im Bahnsystem. Mit Portionen bestückte Transportmover werden somit nicht behindert.

Die Erfindung betrifft auch eine Kopplungsvorrichtung, insbesondere für eine erfindungsgemäße Vorrichtung oder in Kombination mit einer erfindungsgemäßen Vorrichtung. Die Kopplungsvorrichtung ist dazu ausgebildet, mehrere Teilstrecken eines Bahnsystems, auf dem mehrere individuell bewegbare oder jeweils als zusammengeschlossene Einheit bewegbare Transportmover vorgesehen sind, miteinander zu koppeln. Die Transportmover sind mittels einer Steuereinrichtung entlang wenigstens einer vorgegebenen Bahn in einer Transportrichtung bewegbar und umfassen jeweils zumindest einen mit dem Bahnsystem zusammenwirkenden Läufer und wenigstens einen am Läufer angebrachten Träger.

Die Kopplungsvorrichtung umfasst wenigstens ein Bahnmodul mit Streckenabschnitten, die zumindest teilweise in die Teilstrecken integrierbar sind, und zwischen den Teilstrecken verlaufende Verbindungsabschnitte. Unterschiedliche Teilstrecken können somit, insbesondere kaskadenartig, miteinander verbunden werden.

Gemäß einer Ausführungsform sind die Teilstrecken Funktionsstrecken, die jeweils von einem Portionierbereich zu einem Abgabebereich führen, und zurück. Die Funktionsstrecken können beispielsweise eine Portioniervorrichtung mit einer Verpackungsvorrichtung verbinden. Die Funktionsstrecken können auch die Funktion eines Einlegers bereitstellen. Die Kopplungsvorrichtung ermöglicht somit insbesondere ein Zusammenschließen mehrerer, bevorzugt zumindest im Wesentlichen parallel orientierter Schneidlinien.

Nach einer weiteren Ausführungsform umfassen mittels des Bahnmoduls gekoppelte Teilstrecken jeweils einen Hinweg und einen Rückweg, wobei das Bahnmodul derart in das Bahnsystem integrierbar ist, dass zum Wechseln von Teilstrecken durch das Bahnmodul bewegte Transportmover von Hinweg zu Hinweg oder von Rückweg zu Rückweg wechseln. Das Wechseln der Teilstrecken kann beispielsweise mittels Weichen erfolgen.

Gemäß einer weiteren Ausführungsform umfassen die Streckenabschnitte Integrationsabschnitte, die in die Teilstrecken integrierbar sind, und Abkürzungsabschnitte, welche die Integrationsabschnitte verbinden und die Bahn der jeweiligen Teilstrecke abkürzen. Die Integrationsabschnitte ersetzen somit jeweils einen Abschnitt der betreffenden Teilstrecke. Durch die Abkürzungsabschnitte kann ein Transportmover beispielsweise einen Portionierbereich und/oder einen Abgabebereich umgehen und so z.B. schneller an den gewünschten Ort bewegt werden. Auch ist es so z.B. möglich, einen Abgabebereich dann nicht anzufahren, wenn keine Portion auf dem Transportmover vorhanden ist.

Die Flexibilität der Vorrichtung lässt sich hierdurch enorm steigern, denn in Abhängigkeit von deren jeweiligen Leistungsparametern, z.B. Beladung mit Produktriegeln, Schneidleistung und Abgabeleistung, können erfindungsgemäß die Transportmover je nach Bedarf zwischen den einzelnen Teilstrecken, insbesondere einzelnen Schneidlinien, hin- und herwechseln.

Nach einer weiteren Ausführungsform umfassen mittels des Bahnmoduls gekoppelte Teilstrecken jeweils einen Hinweg und einen Rückweg, wobei das Bahnmodul paarweise vorgesehene Funktionsabschnitte, insbesondere Integrationsabschnitte, Abkürzungsabschnitte und/oder Verbindungsabschnitte, umfasst und bei jedem Paar der eine Funktionsabschnitt dem Hinweg und der andere Funktionsabschnitt dem Rückweg einer jeweiligen Teilstrecke zugeordnet ist.

Gemäß einer weiteren Ausführungsform verlaufen mittels des Bahnmoduls gekoppelte Teilstrecken zumindest im Wesentlichen parallel zueinander, wobei das Bahnmodul zumindest im Wesentlichen T-förmig ist und zwei Verbindungsabschnitte, zwei Integrationsabschnitte und zwei Abkürzungsabschnitte umfasst, die jeweils zumindest im Wesentlichen parallel zueinander verlaufen. Insbesondere können die Verbindungsabschnitte parallel zu den Abkürzungsabschnitten verlaufen. Rechtwinklig hierzu können die Integrationsabschnitte angeordnet sein.

Nach einer weiteren Ausführungsform ist für das Bahnmodul eine separate Steuerung, eine mit dem Bahnsystem korrespondierende Steuerung und/oder eine Vorrichtung zur Anbindung an die Steuereinrichtung des Bahnsystems vorgesehen. Die Kopplungsvorrichtung kann demnach als standardisierte Einheit ausgebildet sein, welche modulartig in ein Bahnsystem eingebunden werden kann. Die Komponenten der Kopplungsvorrichtung können vorkonfiguriert sein, so dass eine schnelle Einbindung möglich ist. Insbesondere können die Schnittstellen und Abmessungen standardisiert sein. So kann auch die Herstellung standardisiert erfolgen. Die Steuerung des Bahnmoduls kann aber auch einfach von der Bahnsystem-Steuerung mit übernommen werden.

Die Kopplungsvorrichtung kann beispielsweise als vorgefertigte Einheit bei Bahnsystemen eingeplant und verbaut werden, da das Betriebsverhalten, insbesondere im Zusammenspiel von mehreren Weichen, und/oder der Einfluss der enthaltenen Abschnitte als Puffer für die Transportmover bekannt sind.

Alle hier beschriebenen Ausführungsformen der Vorrichtungen sind insbesondere dazu ausgebildet, nach dem hier beschriebenen Verfahren betrieben zu werden. Ferner können alle hier beschriebenen Ausführungsformen der Vorrichtungen sowie alle hier beschriebenen Ausführungsformen des Verfahrens jeweils miteinander kombiniert werden.

Die Erfindung wird im Folgenden beispielhaft unter Bezugnahme auf die Zeichnungen beschrieben. Es zeigen:
- Fig. 1: eine schematische Draufsicht einer Ausführungsform einer erfindungsgemäßen Bewegungsvorrichtung,
- Fig. 2: eine schematische Draufsicht einer weiteren Ausführungsform einer erfindungsgemäßen Bewegungsvorrichtung,
- Fig. 3: eine schematische Draufsicht einer Ausführungsform einer Bewegungsvorrichtung mit einer erfindungsgemäßen Kopplungsvorrichtung, und
- Fig. 4: eine schematische Draufsicht auf eine weitere Ausführungsform einer Bewegungsvorrichtung mit einer erfindungsgemäßen Kopplungsvorrichtung.

Zunächst ist zu bemerken, dass die dargestellten Ausführungsformen rein beispielhafter Natur sind. Insbesondere kann die Anzahl der Spuren und Teilstrecken variieren. Die Merkmale einer Ausführungsform können auch beliebig mit Merkmalen einer anderen Ausführungsform kombiniert werden.

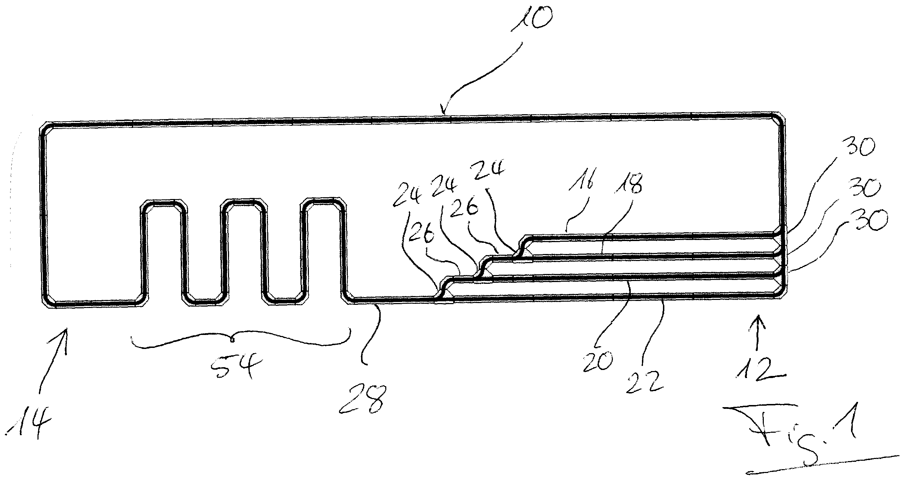

Fig. 1 zeigt ein als Rundstrecke ausgebildetes Bahnsystem 10 mit einem Portionierbereich 12 und einem Abgabebereich 14. Auf dem Bahnsystem 10 können nicht dargestellte Transportmover bewegt werden.

Im Portionierbereich 12 können eine oder mehrere Portioniervorrichtungen, z.B. Aufschneidevorrichtungen oder Fördereinheiten, mit jeweils einer oder mehreren Spuren vorgesehen sein. Jeder Spur der Portioniervorrichtung ist eine separate Aufnahmespur 16, 18, 20, 22 zugeordnet. Jede der vier Aufnahmespuren 16, 18, 20, 22 wird zunächst einer Spur der Portioniervorrichtung zugeführt. Ein auf dieser Aufnahmespur 16, 18, 20, 22 bewegter Transportmover nimmt dabei eine Portion auf.

Die Transportmover können alle mit gleicher Längsausrichtung an der Portioniervorrichtung vorbeigeführt werden. Alternativ können eine oder mehrere Aufnahmespuren 16, 18, 20, 22 auch zumindest teilweise quer dazu verlaufen, um eine Portion mit einer anderen Orientierung auf dem Transportmover aufnehmen zu können.

Über Weichen 24 werden die Aufnahmespuren 16, 18, 20, 22 sukzessive zusammengeführt und somit vereint. Die Aufnahmespuren 16, 18, 20, 22 sind unterschiedlich lang. So wird zunächst die kürzeste Aufnahmespur 16 über eine Weiche 24 mit der zweitkürzesten Aufnahmespur 18 vereint. Nach einem Bahnsegment 26 werden die Aufnahmespuren 18 und 20 über eine weitere Weiche 24 zusammengeführt. Es folgt ein weiteres Bahnsegment 26, ehe die Aufnahmespuren 20 und 22 vereint werden. Die Bahnsegmente 26 zwischen den Weichen 24 können baugleich, insbesondere gleich lang, ausgeführt sein. Durch die Bahnsegmente 26 kann eine Pufferung der Transportmover zwischen den Weichen 24 erfolgen.

Sind die Aufnahmespuren 16, 18, 20, 22 vereint, verbleibt eine einzige Abgabespur 28. Von dieser Abgabespur 28 werden die Portionen in einem Abgabebereich 14 abgegeben, beispielsweise an eine Verpackungsvorrichtung oder eine Fördereinheit, z.B. ein Einlegeband. Im Anschluss an den Abgabebereich 14 wird die Abgabespur 28 wieder zurückgeführt und über Weichen 30 in die Aufnahmespuren 16, 18, 20, 22 aufgeteilt.

Erfindungsgemäß werden zunächst leere Transportmover einspurig aus dem Abgabebereich 14 in Richtung Portionierbereich 12 geführt. Über die Weichen 30 werden die Transportmover im Portionierbereich 12 auf die Aufnahmespuren 16, 18, 20, 22 verteilt. Die Transportmover zweigen auf diese Nebenstrecken ab, um Portionen aufzunehmen. Anschließend werden die Transportmover nach und nach auf dieselbe Abgabespur 28 zusammengeführt. Zum Zusammenführen werden die Aufnahmespuren 16, 18, 20, 22 durch die Weichen 24 vereint. Bahnsegmente 26 können dabei als Puffer dienen. Beim Zusammenführen kann die Reihenfolge und/oder der Abstand zwischen den Transportmovern festgelegt werden.

Fig. 1 zeigt außerdem eine Möglichkeit, wie bei Bedarf einfach durch eine intelligente Streckenführung ein zusätzlicher Funktionsbereich geschaffen werden kann, hier ein vor dem Abgabebereich 14 gelegener Pufferbereich 54. Durch eine hier mehrere Schleifen umfassende, gewissermaßen mäandernde Streckenführung entsteht ein Bereich, der eine relativ höhere Bahn- bzw. Streckendichte aufweist als unmittelbar vorgelagerte und nachgelagerte Bereiche des Bahnsystems 10. Die Pufferstrecke besitzt folglich eine Länge, die wesentlich größer ist als die kürzeste Entfernung zwischen Beginn und Ende des Pufferbereiches 54. Im dargestellten Beispiel ist die Bahn im Pufferbereich 54 einspurig ausgebildet. Alternativ kann zur Vervielfachung der Pufferkapazität für den Pufferbereich 54 eine mehrspurige Streckenführung vorgesehen sein, die eingangs- und ausgangsseitig mit Weichen in die ansonsten einspurige Bahn eingebunden ist.

Die Portionen werden anschließend im Abgabebereich 14 abgegeben und z.B. verpackt. Erfindungsgemäß wird auf diese Weise ein kontinuierlicher Portionsstrom zur Verpackungsvorrichtung ermöglicht.

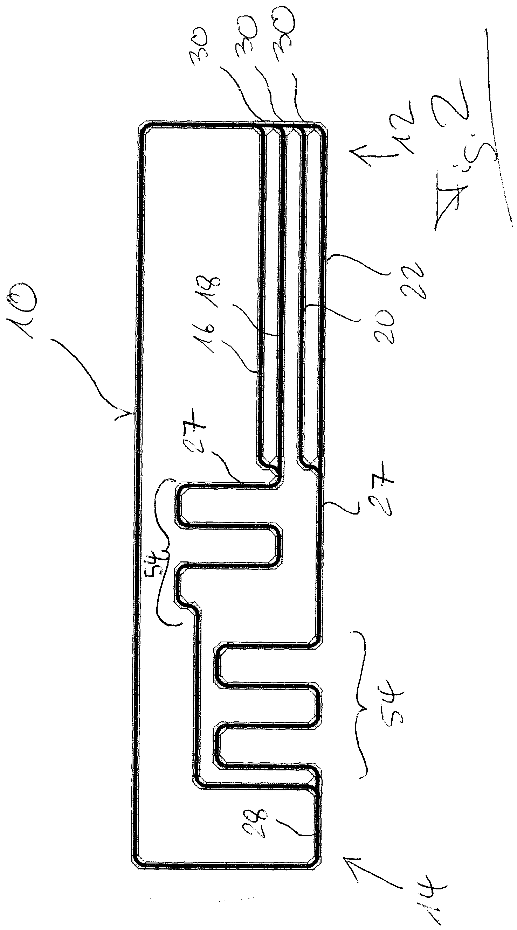

Das Bahnsystem 10 gemäß Fig. 2 unterscheidet sich von dem Bahnsystem der Fig, 1 hinsichtlich der Art und Weise des Zusammenführens der Aufnahmespuren 16, 18, 20 und 22 auf die Abgabespur 28. Die Aufnahmespuren werden hier nicht einzeln nacheinander, sondern zunächst gruppenweise jeweils auf eine Zwischenspur 27 vereint. Die von den Aufnahmespuren 16 und 18 gebildete Gruppe und die von den Aufnahmespuren 20 und 22 gebildete Gruppe werden parallel vereint, so dass zwei Zwischenspuren 27 vorhanden sind. Nach Durchlaufen eines jeweiligen Pufferbereiches 54 entsprechend dem Ausführungsbeispiel der Fig. 1 werden vor dem Abgabebereich 14 die beiden Zwischenspuren 27 auf die Abgabespur 28 vereint.

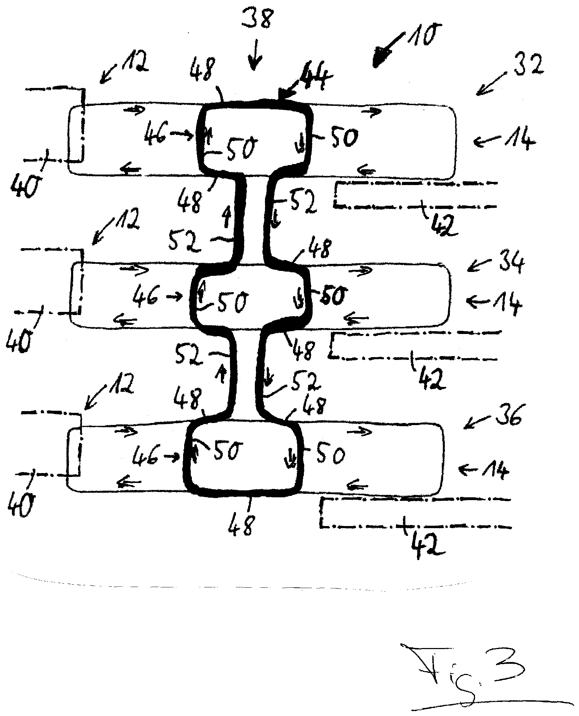

Fig. 3 zeigt ein Bahnsystem 10 mit drei benachbarten Teilstrecken 32, 34, 36, die über eine zentrale Kopplungsvorrichtung 38 miteinander verbunden sind, welche in Fig. 3 durch eine größere Strichstärke hervorgehoben ist.

Die Teilstrecken 32, 34, 36 können jeweils einen Portionierbereich 12, in welchem Portionen jeweils durch eine Aufschneidevorrichtung 40 auf die Transportmover gelangen, und einen Abgabebereich 14 umfassen, in dem die Portionen jeweils an eine Verpackungsvorrichtung 42 abgegeben werden.

Die Kopplungsvorrichtung 38 umfasst ein Bahnmodul 44 mit Streckenabschnitten 46, welche Integrationsabschnitte 48, die in die Teilstrecken 32, 34, 36 integriert sind, und Abkürzungsabschnitte 50 umfassen, welche die Integrationsabschnitte 48 verbinden und die jeweiligen Teilstrecken 32, 34, 36 abkürzen.

Das Bahnmodul 44 umfasst ferner Verbindungsabschnitte 52, welchen zwischen den Teilstrecken 32, 34, 36 verlaufen und diese miteinander verbinden. Auf diese Weise kann eine Verbindung zu benachbarten Teilstrecken 32, 34, 36 hergestellt werden.

Ausgehend von der Teilstrecke 36 zweigt zwischen dem Portionierbereich 12 und dem Abgabebereich 14 über eine Weiche ein Verbindungsabschnitt 52 ab. Dieser Verbindungsabschnitt 52 dient als Zuführung zur benachbarten Teilstrecke 34. Der Verbindungsabschnitt 52 mündet in diese Teilstrecke 34 in den Weg vom Abgabebereich 14 zum Portionierbereich 12, und zwar in Portionsflussrichtung gesehen in stromaufwärtiger Richtung vor dem Abkürzungsabschnitt 50.

Der Abkürzungsabschnitt 50 befindet sich innerhalb der Teilstrecke 34 und bildet eine Parallelstrecke bzw. Umgehung des Weges zum Portionierbereich 12. Der Abkürzungsabschnitt 50 mündet über eine Weiche in den Integrationsabschnitt 48, welcher zum Abgabebereich 14 der Teilstrecke 34 führt.

Von diesem Integrationsabschnitt 48 zweigt ein weiterer paralleler Abkürzungsabschnitt 50 ab, welcher den Abgabebereich 14 der Teilstrecke 34 umgeht. Der Abkürzungsabschnitt 50 mündet in den vom Abgabebereich 14 kommenden Integrationsabschnitt 48. Davon in Portionsflussrichtung stromabwärts gesehen befindet sich eine weitere Weiche, von der aus ein zweiter Verbindungsabschnitt 52 abzweigt und wieder zurück zur Teilstrecke 36 führt. Die Einmündung erfolgt zwischen dem Portionierbereich 12 und dem Abgabebereich 14.

Entsprechend können auch die Teilstrecken 34 und 32 miteinander verbunden werden. Auch können der Portionierbereich 12 und der Abgabebereich 14 vertauscht sein.

Die erfindungsgemäße Kopplungsvorrichtung kann auch beliebige Teilstrecken miteinander verbinden. Bei den Teilstrecken handelt es sich folglich nicht zwingend um Strecken zwischen einem Portionierbereich 12 und einem Abgabebereich 14. So können außer Lebensmitteln auch beliebige andere Produkte zwischen wie auch immer ausgebildeten Funktionsbereichen transportiert werden.

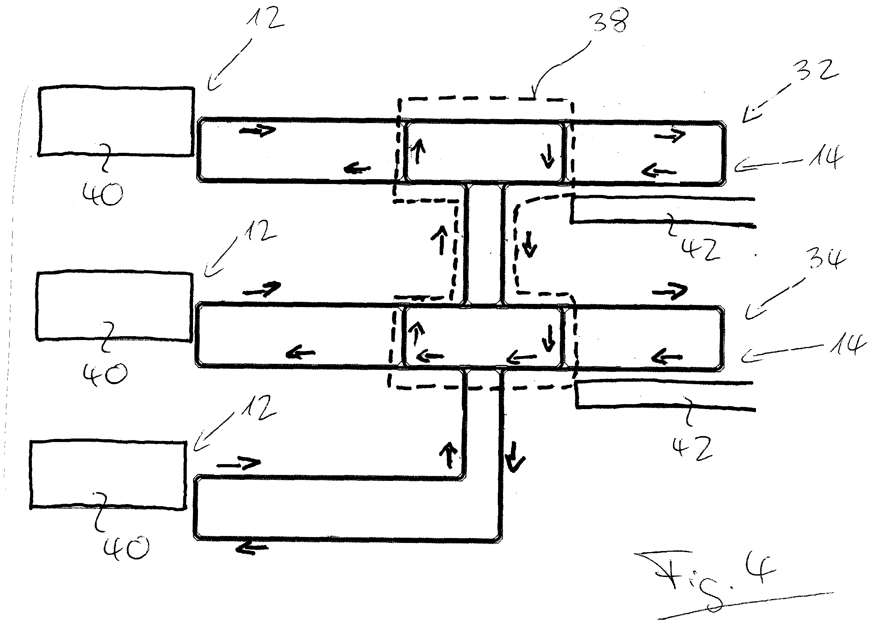

Das Ausführungsbeispiel gemäß Fig. 4 zeigt, dass die Anzahl der Aufschneidevorrichtungen 40 nicht der Anzahl der Verpackungsvorrichtungen 42 entsprechen muss. Die mittels der in Fig. 4 unteren Aufschneidevorrichtung 40 erzeugten Portionen können in die Teilstrecken 32, 34 der anderen beiden Aufschneidevorrichtungen 40 eingeschleust werden. Transportmover können aus diesen Teilstrecken 32, 34 ausgeschleust und der unteren Aufschneidevorrichtung 40 zugeführt werden. Verbunden sind die beiden Teilstrecken 32, 34 und die untere Aufschneidevorrichtung 40 durch eine Kopplungsvorrichtung 38, die in Fig. 4 durch eine umgebende gestrichelte Linie angedeutet und hinsichtlich Aufbau und Funktionsweie grundsätzlich der Kopplungsvorrichtung 38 von Fig. 3 entspricht.

### Bezugszeichenliste

- 10: Bahnsystem
- 12: Portionierbereich
- 14: Abgabebereich
- 16, 18, 20, 22: Aufnahmespur
- 24: Weiche
- 26: Bahnsegment
- 27: Zwischenspur
- 28: Abgabespur
- 30: Weiche
- 32, 34, 36: Teilstrecke
- 38: Kopplungsvorrichtung
- 40: Aufschneidevorrichtung
- 42: Verpackungsvorrichtung
- 44: Bahnmodul
- 46: Streckenabschnitt
- 48: Integrationsabschnitt
- 50: Abkürzungsabschnitt
- 52: Verbindungsabschnitt
- 54: Pufferbereich

## Patentansprüche

1. Vorrichtung zum Bewegen von Portionen, die jeweils wenigstens eine von einem Lebensmittelprodukt, insbesondere mittels einer Aufschneidevorrichtung (40), insbesondere eines Hochgeschwindigkeits-Slicers, abgetrennte Scheibe umfassen,
mit einer Mehrzahl individuell bewegbarer oder jeweils als zusammengeschlossene Einheit bewegbarer Transportmover zum Transport der Portionen,
mit einem Bahnsystem (10) für die Transportmover, in welchem die Transportmover entlang wenigstens einer vorgegebenen Bahn in einer Transportrichtung bewegbar sind, und
mit einer Steuereinrichtung zum Steuern der Bewegungen der Transportmover in dem Bahnsystem (10),
wobei die Transportmover jeweils zumindest einen mit dem Bahnsystem (10) zusammenwirkenden Läufer und wenigstens einen am Läufer angebrachten Träger für Portionen umfassen, und
wobei das Bahnsystem (10) mehrere Aufnahmespuren (16, 18, 20, 22) zur mehrspurigen Aufnahme von Portionen in einem Portionierbereich (12) und zumindest eine Abgabespur (28), die mehreren Aufnahmespuren (16, 18, 20, 22) zugeordnet ist, zur Abgabe von Portionen in einem Abgabebereich (14) umfasst.

2. Vorrichtung nach Anspruch 1,
**dadurch gekennzeichnet,**
**dass** die Aufnahmespuren (16, 18, 20, 22) unterschiedlich lang sind.

3. Vorrichtung nach Anspruch 1 oder 2,
**dadurch gekennzeichnet,**
**dass** die Aufnahmespuren (16, 18, 20, 22) nacheinander miteinander vereint werden, oder dass zunächst die Aufnahmespuren (16, 18, 20, 22) gruppenweise jeweils auf zumindest eine Zwischenspur (27) und anschließend die Zwischenspuren (27) auf die Abgabespur (28) vereint werden,
wobei insbesondere das Vereinen der Aufnahmespuren (16, 18, 20, 22) stets von derselben Seite her erfolgt.

4. Vorrichtung nach einem der vorhergehenden Ansprüche,
**dadurch gekennzeichnet,**
**dass** Weichen (24) vorgesehen sind, welche die Aufnahmespuren (16, 18, 20, 22) vereinen, und/oder
**dass** sich die Abgabespur (28) im Anschluss an den Abgabebereich (14) in mehrere Aufnahmespuren (16, 18, 20, 22) aufteilt und/oder dass Weichen (30) vorgesehen sind, welche die Abgabespur (28) aufteilen, und/oder
**dass** die Aufnahmespuren (16, 18, 20, 22) und die Abgabespur (28) Bestandteile einer geschlossenen Rundstrecke des Bahnsystems (10) sind,
die vom Portionierbereich (12) in den Abgabebereich (14) und zurück zum Portionierbereich (12) führt.

5. Vorrichtung nach einem der vorhergehenden Ansprüche,
**dadurch gekennzeichnet,**
**dass** das Bahnsystem (10) wenigstens einen Pufferbereich (54) umfasst,
der eine höhere Bahndichte aufweist als dem Pufferbereich (54) unmittelbar vorgelagerte und nachgelagerte Bereiche und/oder der durch eine ein- oder mehrspurige Pufferstrecke gebildet ist, deren Länge ein Mehrfaches der kürzesten Entfernung zwischen Beginn und Ende des Pufferbereiches (54) beträgt.

6. Verfahren zum kontinuierlichen Zuführen von Portionen zu einer Verpackungsvorrichtung (42) mit einer Vorrichtung nach einem der vorhergehenden Ansprüche,
wobei die Transportmover im Portionierbereich (12) in mehreren Aufnahmespuren (16, 18, 20, 22) Portionen aufnehmen,
die Transportmover aus zumindest einigen der Aufnahmespuren (16, 18, 20, 22) nacheinander auf dieselbe Abgabespur (28) zusammengeführt werden, und
die Portionen im Abgabebereich (14) von der Abgabespur (28) abgegeben werden.

7. Verfahren nach Anspruch 6,
**dadurch gekennzeichnet,**
**dass** während und/oder nach dem Zusammenführen der Transportmover jeweils vorgegebene oder vorgebbare Abstände zwischen den Transportmovern eingestellt werden.

8. Verfahren nach Anspruch 6 oder 7,
**dadurch gekennzeichnet,**
**dass** während und/oder nach dem Zusammenführen der Transportmover eine jeweils vorgegebene oder vorgebbare Reihenfolge der Transportmover eingestellt wird, und/oder
**dass** ein Transportmover nur dann vom Portionierbereich (12) in Richtung Abgabebereich (14) bewegt wird, wenn er beladen ist.

9. Kopplungsvorrichtung (38), insbesondere für eine Vorrichtung oder in Kombination mit einer Vorrichtung nach einem der Ansprüche 1 bis 5, zum Koppeln mehrerer Teilstrecken (32, 34, 36) eines Bahnsystems (10), auf dem mehrere individuell bewegbare oder jeweils als zusammengeschlossene Einheit bewegbare Transportmover vorgesehen sind, die mittels einer Steuereinrichtung entlang wenigstens einer vorgegebenen Bahn in einer Transportrichtung bewegbar sind und die jeweils zumindest einen mit dem Bahnsystem (10) zusammenwirkenden Läufer und wenigstens einen am Läufer angebrachten Träger umfassen,
wobei die Kopplungsvorrichtung (38) wenigstens ein Bahnmodul (44) mit Streckenabschnitten (46), die zumindest teilweise in die Teilstrecken (32, 34, 36) integrierbar sind, und zwischen den Teilstrecken (32, 34, 36) verlaufende Verbindungsabschnitte (52) umfasst.

10. Kopplungsvorrichtung (38) nach Anspruch 9,
**dadurch gekennzeichnet,**
**dass** die Teilstrecken (32, 34, 36) Funktionsstrecken sind, die jeweils von einem Portionierbereich (12) zu einem Abgabebereich (14) führen, und zurück.

11. Kopplungsvorrichtung (38) nach Anspruch 9 oder 10,
**dadurch gekennzeichnet,**
**dass** mittels des Bahnmoduls (44) gekoppelte Teilstrecken (32, 34, 36) jeweils einen Hinweg und einen Rückweg umfassen, wobei das Bahnmodul (44) derart in das Bahnsystem integrierbar ist, dass zum Wechseln von Teilstrecken (32, 34, 36) durch das Bahnmodul (44) bewegte Transportmover von Hinweg zu Hinweg oder von Rückweg zu Rückweg wechseln.

12. Kopplungsvorrichtung (38) nach einem der Ansprüche 9 bis 11,
**dadurch gekennzeichnet,**
**dass** die Streckenabschnitte (46) Integrationsabschnitte (48), die in die Teilstrecken (32, 34, 36) integrierbar sind, und Abkürzungsabschnitte (50) umfassen, welche die Integrationsabschnitte (48) verbinden und die Bahn der jeweiligen Teilstrecke (32, 34, 36) abkürzen.

13. Kopplungsvorrichtung (38) nach einem der Ansprüche 9 bis 12,
**dadurch gekennzeichnet,**
**dass** mittels des Bahnmoduls (44) gekoppelte Teilstrecken (32, 34, 36) jeweils einen Hinweg und einen Rückweg umfassen, wobei das Bahnmodul (44) paarweise vorgesehene Funktionsabschnitte umfasst und bei jedem Paar der eine Funktionsabschnitt dem Hinweg und der andere Funktionsabschnitt dem Rückweg einer jeweiligen Teilstrecke (32, 34, 36) zugeordnet ist.

14. Kopplungsvorrichtung (38) nach einem der Ansprüche 9 bis 13,
**dadurch gekennzeichnet,**
**dass** mittels des Bahnmoduls (44) gekoppelte Teilstrecken (32, 34, 36) zumindest im Wesentlichen parallel zueinander verlaufen, wobei das Bahnmodul (44) zumindest im Wesentlichen T-förmig ist und zwei Verbindungsabschnitte (52), zwei Integrationsabschnitte (48) und zwei Abkürzungsabschnitte (50) umfasst, die jeweils zumindest im Wesentlichen parallel zueinander verlaufen.

15. Kopplungsvorrichtung (38) nach einem der Ansprüche 9 bis 14,
**dadurch gekennzeichnet,**
**dass** für das Bahnmodul (44) eine separate Steuerung, eine mit dem Bahnsystem (10) korrespondierende Steuerung und/oder eine Vorrichtung zur Anbindung an die Steuereinrichtung des Bahnsystems (10) vorgesehen ist.
